# EUROPÄISCHE PATENTSCHRIFT

(11) **EP 1 957 251 B1**
(45) Veröffentlichungstag und Bekanntmachung des Hinweises auf die Patenterteilung: **24.11.2010**
(21) Anmeldenummer: 06806645.5
(22) Anmeldetag: 31.10.2006
(51) Int. Cl.: B29C 39/10, B61L 9/00, G09F 9/30

(54) **VERFAHREN ZUR HERSTELLUNG EINER SIGNALPLATTE UND VERKEHRSSIGNAL MIT EINER SIGNALPLATTE**
METHOD FOR PRODUCING A SIGNAL PLATE AND TRAFFIC SIGNAL WITH A SIGNAL PLATE
PROCEDE DE FABRICATION D'UN PANNEAU DE SIGNALISATION ET SIGNAL DE CIRCULATION DOTE D' UN PANNEAU DE SIGNALISATION

(30) Priorität: 09.12.2005 EP 05026948
(43) Veröffentlichungstag der Anmeldung: 20.08.2008
(73) Patentinhaber: Siemens Schweiz AG, 8047 Zürich (CH)
(72) Erfinder: MARTI, Michael, CH-8400 Winterthur (CH)
(74) Vertreter: Fischer, Michael
(86) Internationale Anmeldenummer: PCT/EP2006/010481
(87) Internationale Veröffentlichungsnummer: WO 2007/065504

(56) Entgegenhaltungen:
- EP-A- 0 072 964
- DE-A1- 4 003 846
- DE-A1- 19 641 680
- DE-A1- 19 833 039
- GB-A- 293 142
- GB-A- 2 407 291
- US-A- 3 084 391
- US-A- 3 719 941
- US-A1- 2005 152 139
- DATABASE EPODOC EUROPEAN PATENT OFFICE, THE HAGUE, NL; XP002381184 -& CN 1 162 819 C (PAN ERBAO) 18. August 2004 (2004-08-18)

## Beschreibung

Die vorliegende Erfindung betrifft ein Verfahren zur Herstellung einer Signalplatte und ein Verkehrssignal mit einer aus kunstsotffguss erzeugten.

Signalplatte gemäß dem Oberbegriff des Patentanspruchs 10. Ein Verfahren und ein Verkehrssignal vergleichbarer Art ist beispielsweise aus der EP-A-0 072 964 bekannt.

Verkehrssignale zur Steuerung von Verkehrflüssen finden heute in vielfältiger Form Anwendung. Im Eisenbahnverkehr wird der Zugverkehr heute immer noch überwiegend mit Lichtsignalen geregelt, die unterschiedlichster Bauart sein können. Allen Lichtsignalen gemeinsam ist in der Regel eine Signalplatte, in die die Lichtpunkte eingesetzt werden. Diese Signalplatte besteht traditionell aus Metall und wird aus Stabilitätsgründen entweder mit seitlich abgebogenen Elementen und/oder mit einer zweiten tragenden Metallplatte ausgeführt. Die Durchbrüche für die einzelnen Leuchtpunkte müssen dann in der Signalplatte erstellt werden und die Leuchtpunkte anschliessend in die Durchbrüche eingesetzt und befestigt werden. Wegen der erforderlichen Metallbearbeitung ist dieses Verfahren aufwendig und macht es erforderlich, an der Signalplatte weitere Elemente für die Befestigung der Leuchtpunkte vorzusehen.

Aus der Schriften US 2005/0152139 A1 ist eine mehrlagige Signalplatte bekannt, bei der die Leuchtelemente durch die verschiedenen Layers gehalten werden. Gemäss der Lehr in DE 196 41 680 A1 ist eine Signalleuchte mit Leuchtdioden offenbart. Die konstruktive Befestigung ist der Schrift DE 196 41 680 A1 nicht zu entnehmen. Die Schrift EP 0 072 964 A1 offenbart gemäss den Figuren eine Grossanzeigevorrichtung bei der die Leuchtmittel in aufwendig zu erstellende Bohrungen eingefügt sind.

Der vorliegenden Erfindung liegt daher die Aufgabe zugrunde, ein Verfahren anzugeben, mit dem eine Signalplatte als Teil eines Verkehrssignals mit einem geringeren Aufwand bereitgestellt werden kann. Weiter soll ein diesbezügliches Verkehrssignal angegeben werden.

Diese Aufgabe wird bezüglich des Verfahrens durch die im Patentanspruch 1 angegebenen Verfahrensschritte gelöst.

Auf diese Weise kann die Signalplatte sehr einfach hergestellt werden, weil der Bearbeitungsprozess sehr stark vereinfacht ist, in dem die Leuchtpunkte und/oder die Leerbuchsen an den für sie vorgesehenen Orten positioniert und im Wege des Giessverfahrens und der nachfolgenden Aufhärtung kraft- und formschlüssig gehalten werden. Weitere Verarbeitungsschritte zur Befestigung der Leuchtpunkte und/oder der Leerbuchsen sind nicht mehr erforderlich. Es sei angemerkt, dass unter einem Leuchtpunkt ein Einsatz mit einer integrierten bzw. integrierbaren Lichtquelle (wie z.B. Glühlampe, LED) verstanden wird.

Eine vergleichsweise einfache Anordenbarkeit der Leuchtpunkte und/oder der Leerbuchse ergibt sich, wenn der Leuchtpunkt und/oder die Leerbuchse ein im wesentlichen zylindrisches Gehäuse aufweist und in im wesentlichen senkrechter Orientierung zur Ebene der Gussform in die Gussform eingelegt wird. Grundsätzlich kann das Gehäuse aber jede beliebige Querschnittsform haben, weil entsprechend der Fliessfähigkeit des Kunststoffs eine gute Anpassung an relativ beliebige Querschnittsformen ermöglicht ist.

Um auf der einen Seite vergleichsweise wenig Kunststoff einsetzen zu müssen und auf der anderen Seite trotzdem eine hinreichend feste Verankerung des Leuchtpunkts und/oder der Leerbuchse in dem Kunststoff zu erzielen, kann es in zweckmässiger Weiterbildung der Erfindung vorgesehen sein, den Leuchtpunkt und/oder die Leerbuchse bis einer Tiefe einzugiessen, die maximal ihrem Durchmesser entspricht.

Zur Erhöhung der mechanischen Stabilität der Signalplatte kann vor dem Ausgiessen der Gussform mindestens ein strukturverstärkendes Element in die Gussform eingelegt werden. Dieses strukturverstärkende Element kann anschliessend zusammen mit dem Leuchtpunkt und/oder der Leerbuchse in einem Arbeitsgang eingegossen werden. Die Anordnung weiterer strukturverstärkender Elemente kann so vermieden werden, womit auch weitere Fertigungsschritte gegenüber den herkömmlichen aus Metall hergestellten Signalplatten entfallen können. Ein aufgrund seiner leichten Handhabbarkeit besonders bevorzugtes strukturverstärkendes Element kann beispielsweise eine Glasfasermatte sein.

Um sicher vermeiden zu können, dass der in die Gussform eingegossene Kunststoff unter den Leuchtpunkt und/oder die Leerbuchse fliesst, kann der Leuchtpunkt und/oder die Leerbuchse beim Ausgiessen der Gussform auf die Gussform gedrückt werden.

Um beispielsweise auch den Leuchtpunkt und/oder die Leerbuchse aus der Ebene der Signalplatte heraustreten zu lassen, kann die Gussform mindestens eine Ausbuchtungen aufweisen, in die der Leuchtpunkt und/oder die Leerbuchse eingelegt werden. Weiter kann die mindestens eine Ausbuchtung so geformt sein, dass aus der Ebene der Signalplatte herausragende dem Leuchtpunkt zugeordnete Formelemente, insbesondere Schutz- oder Schirmelemente, beim Ausgiessen miterzeugt werden. So können zum Beispiel Seitenblenden, Überstände oder sonstige aus der Ebene der Signalplatte herausragende Elemente direkt mit dem Giessen der Signalplatte ausgeformt werden. Gleichzeitig können diese Elemente mit dem Leuchtpunkt und/oder der Leerbuchse dauerhaft verbunden werden.

Um diese aus der Ebene der Signalplatte besonders stabil ausgestalten zu können, kann vor dem Ausgiessen der Gussform in die Ausbuchtung mindestens ein weiteres strukturverstärkendes Element eingebracht werden. Besonders geeignet hierfür ist zum Beispiel die vorstehend genannte Glasfasermatte, die in den Bereichen in die Ausbuchtung eingebogen wird, auf denen ansonsten ein Leuchtpunkt und/oder eine Leerbuchse aufliegen würde. Damit werden die Löcher in der Glasfasermatte für die Leuchtpunkte und/oder die Leerbuchse nicht als solches ausgeschnitten und die ausgeschnittenen Teile entfernt, sondern bei entsprechendem Schnitt von der Lochmitte in radialer Richtung zum Rand können die am Lochrand noch gehaltenen Segmente in die Ausbuchtung eingeschlagen und später dort mit dem Kunststoff eingegossen werden.

Hinsichtlich des Verkehrssignals wird die vorstehend genannte Ausgabe erfindungsgemäss durch ein Verkehrssignal gemäß Patentanspruch 10 gelöst.

In vorteilhafter Weiterbildung der Erfindung zur Erzielung einer hinreichend hohen Stabilität kann in die Signalplatte mindestens ein strukturverstärkendes Element, insbesondere eine Glasfasermatte, eingegossen sein.

Ausführungsbeispiele der Erfindung werden nachfolgend anhand der Zeichnung näher erläutert. Dabei zeigen:
- Figur 1: in schematischer Darstellung die wichtigsten Schritte a) bis d) zur Herstellung einer ersten Signalplatte; und
- Figur 2: einen Längsschnitt durch eine zweite Signalplatte im Bereich eines Leuchtpunktes.

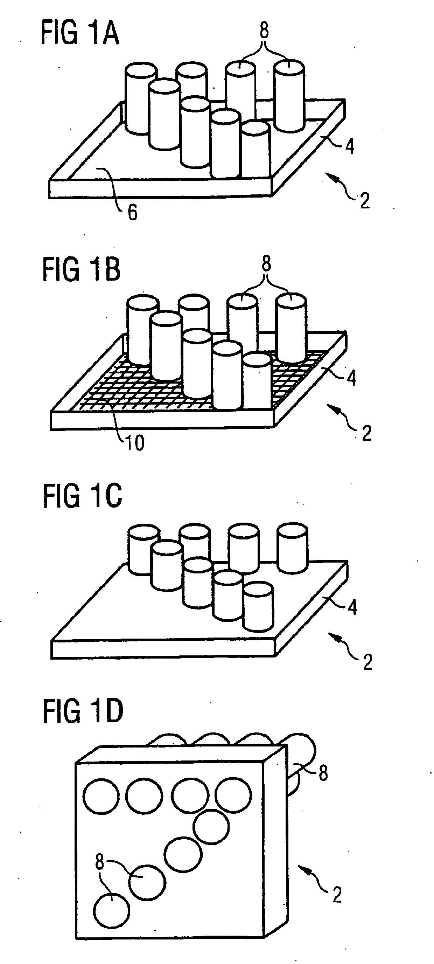

Figur 1 zeigt in einer schematischen Darstellung die wesentlichen Herstellungsschritte a) bis d) zur Erzeugung einer Signalplatte 2 gemäss der vorliegenden Erfindung. Im ersten Schritt a) wird eine der äusseren Form der Signalplatte 2 entsprechende Gussform 4 bereitgestellt, die in der Regel eine einem Verkehrsteilnehmer (nicht dargestellt) zugewandte im wesentlichen ebene Signalfläche 6 aufweist. In diese Gussform werden Leuchtpunkte 8 an Positionen eingelegt, die dem später vorgesehenen Ort für die Leuchtpunkte innerhalb der Signalplatte 2 entsprechen. Diese Leuchtpunkte 8 können bereits die gesamte Leuchtvorrichtung und das erforderliche Anschlussmaterial umfassen. Alternativ möglich wäre es auch, anstelle der Leuchtpunkte 8 sogenannte Leerbuchsen in die Gussform 4 einzusetzen, in die dann später der Leuchtpunkt 8 eingebaut wird, beispielsweise durch Eindrehen des Leuchtpunktes 8 in ein Gewinde der Leerbuchse.

Anschliessend wird in dem Schritt b) eine Glasfasermatte 10 unter Aussparung der für die Leuchtpunkte 8 vorgesehenen Fläche in die Gussform 4 eingelegt. Diese Glasfasermatte 10 dient als strukturverstärkendes Element und macht so eine weitere Armierung der Signalplatte 2 entbehrlich. Im Schritt c) erfolgt nun das Ausgiessen der Gussform 4 mit einem fliessfähigen, aushärtbaren Kunststoff zur Erstellung eines zusammenhängenden Gusskörpers mit den integierten Leuchtpunkten 8 und der miteingegossenen Glasfasermatte 10. Hierzu eignet sich beispielsweise ein Epoxidharz, der aus einem flüssigen Harz und einem Härter gemischt, vergossen und anschliessend wärmegehärtet wird. Ergänzend oder alternativ könnte auch Polyurethan und/oder auch laminierte Carbonfasern, sogenannte Composite-Werkstoffe, verwenden werden.

Alternativ könnte auch erst ein wenig des Kunststoffs in die Gussform eingegossen werden und die Glasfasermatte 10 auf den noch weichen Kunststoff gelegt und die Gussform 4 dann anschliessend aufgefüllt werden. Mit dem Aushärten des Kunststoffs entsteht die fertige Signalplatte 2, wie sie im Schritt d) in der Frontansicht dargestellt ist und nun aus der Gussform 4 entnommen worden ist. Im Fall von eingegossenen Leerbuchsen müssten nun noch die Leuchtpunkte 8 in die Leerbuchsen eingesetzt werden.

Wie die Figur 1 schön erkennen lässt, haben die Leuchtpunkte 8 ein im wesentlichen zylindrisches Gehäuse und sind im wesentlichen senkrecht zur Ebene der Gussform 4 in die Gussform 4 eingestellt worden. Selbstverständlich wäre es bei entsprechender Ausgestaltung der Gussform 4 auch möglich, die Leuchtpunkte 8 nicht in einem rechten Winkel aufzustellen, sondern beispielsweise leicht geneigt. Zudem kann die Gussform 4 allgemein Positionierungshilfen aufweisen, die sicherstellen, dass die Leuchtpunkte 8 immer wieder an der gleichen Stelle in der Signalplatte 2 angeordnet sind und damit identische Signalplatten einfacher herstellbar sind.

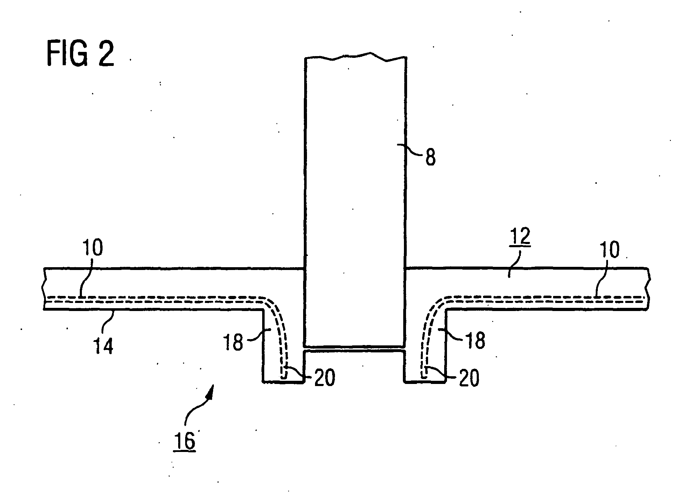

Die Grössenverhältnisse in der Figur 1, aber auch in der Figur 2 zeigen weiter deutlich, dass die Leuchtpunkte 8 bis zu einer Tiefe eingegossen sind, die weniger als ihrem Durchmesser entspricht.

In der gewählten Darstellung der Figur 1 ist jetzt nicht im Detail dargestellt, dass die Leuchtpunkte 8 beim Ausgiessen der Gussform 4 auf die Gussform 4 gedrückt werden. Hierdurch kann vermieden werden, dass flüssiger Kunststoff unter die Leuchtpunkte 8 fliesst und beispielsweise die Linse eines Leuchtpunktes 8 unbrauchbar macht.

Figur 2 zeigt nun in einem Längsschnitt im Bereich eines Leuchtpunkts 8 eine zweite Signalplatte 12, die sich noch in ihrer zugehörigen Gussform 14 befindet. Diese Gussform 14 weist eine Ausbuchtung 16 auf, in die der Leuchtpunkt 8 eingelegt ist. So ist es möglich, dass der Leuchtpunkt 8 die Ebene der Signalplatte 12 durchschneidet. Die Ausbuchtung 16 ist dabei zudem so geformt, dass aus der Ebene der

Signalplatte 12 herausragende, dem Leuchtpunkt 8 zugeordnete Formelemente, im vorliegenden Fall ein Schutzschirm 18, beim Ausgiessen miterzeugt werden. Bei der Fertigung wurde auch schon vor dem Ausgiessen der Gussform 14 mindestens ein weiteres strukturverstärkendes Element in die Ausbuchtung 16 eingebracht, um im besonderen den Schutzschirm 18 ebenfalls ausreichend stabil ausgestalten zu können. Hierzu wurde vorliegend ein Bereich 20 der Glasfasermatte 10 in die Ausbuchtung 16 eingebogen, auf dem ansonsten der Leuchtpunkt 8 aufgelegen hätte.

Die vorstehend erläuterten Signalplatten 2, 14 lassen sich so in einfacher Weise in ein Verkehrssignal integrieren, wie bespielsweise ein Eisenbahnsignal. Die hierbei verwendeten Signalplatten 2, 12 sind einfach herzustellen, weil der Bearbeitungsprozess stark vereinfacht ist, indem die Leuchtpunkte 8 und/oder die Leerbuchsen an den für sie vorgesehenen Orten positioniert und im Wege des Giessverfahrens und der nachfolgenden Aushärtung kraft- und formschlüssig gehalten werden. Weitere substantielle Verarbeitungsschritte zur Befestigung der Leuchtpunkte 8 und/oder der Leerbuchsen sind nicht mehr erforderlich.

### Liste der verwendeten Bezugszeichen

- 2: Signalplatte
- 4: Gussform
- 6: ebene Signalfläche
- 8: Leuchtpunkte
- 10: Glasfasermatte
- 12: zweite Signalplatte
- 14: Gussform
- 16: Ausbuchtung
- 18: Schutzschirm
- 20: Bereich der Glasfasermatte 10

## Patentansprüche

1. Verfahren zur Herstellung einer Signalplatte (2, 12) mit einer ebenen Signalfläche (6), durch
a) Bereitstellen einer der äusseren Form der Signalplatte (2, 12) entsprechenden Gussform (4, 14);
b) Einlegen von mindestens einem Leuchtpunkt (8) und/oder von mindestens einer Leerbuchse in die Gussform (4, 14); wobei
die folgenden Schritte weiter umfasst sind:
c) Ausgiessen der Gussform (4, 14) mit einem fliessfähigen, aushärtbaren Kunststoff zur Erstellung eines Gusskörpers;
d) Aushärten des Kunststoffs; und
e) Entnehmen des Gusskörpers und im Fall von eingegossenen Leerbuchsen Einfügen von Leuchtpunkten (8) in die Leerbuchse, wobei der Leuchtpunkt (8) und/oder die Leerbuchse ein im wesentlichen zylindrisches Gehäuse aufweist und in im wesentlichen senkrechter Orientierung zur ebenen Signalfläche (6), in die Gussform (4, 14) eingelegt wird.

2. Verfahren nach Anspruch 1, wobei
der Leuchtpunkt (8) und/oder die Leerbuchse bis zu einer Tiefe eingegossen werden, die maximal ihrem Durchmesser entspricht.

3. Verfahren nach Anspruch 1 oder 2, wobei
vor dem Ausgiessen der Gussform (4, 14) mindestens ein strukturverstärkendes Element (10) in die Gussform (4, 14) eingelegt wird.

4. Verfahren nach Anspruch 3, wobei
das mindestens eine strukturverstärkende Element eine Glasfasermatte (10) ist.

5. Verfahren nach einem der Ansprüche 1 bis 4, wobei
der Leuchtpunkt (8) und/oder die Leerbuchse beim dem Ausgiessen der Gussform (4, 14) auf die Gussform (14) gedrückt werden.

6. Verfahren nach einem der Ansprüche 1 bis 5, wobei
die Gussform (14) mindestens eine Ausbuchtung (16) aufweist, in die der Leuchtpunkt (8) und/oder die Leerbuchse eingelegt werden.

7. Verfahren nach Anspruch 6, wobei
die mindestens eine Ausbuchtung (16) so geformt ist, dass aus der Ebene der Signalplatte (2, 12) herausragende dem Leuchtpunkt (8) zugeordnete Formelemente (18), insbesondere Schutz- oder Schirmelemente, beim Ausgiessen miterzeugt werden.

8. Verfahren nach Anspruch 7, wobei
vor dem Ausgiessen der Gussform (4, 14) in die Ausbuchtung mindestens ein weiteres strukturverstärkendes Element (20) eingebracht wird.

9. Verfahren nach Anspruch 8, wobei
als weiteres strukturverstärkendes Element ein Bereich (20) der Glasfasermatte (10) in die Ausbuchtung (16) eingebogen wird, auf denen ansonsten ein Leuchtpunkt (8) und/oder eine Leerbuchse aufliegen würde.

10. Verkehrssignal mit einer aus Kunststoffguss erzeugten Signalplatte (2, 12) mit einer ebenen Signalfläche (6), welche Signalplatte mindestens einen Leuchtpunkt (8) enthält, **dadurch gekennzeichnet, dass**
mindestens ein Leuchtpunkt (8) und/oder mindestens eine Leerbuchse kraft- und formschlüssig eingegossen ist, wobei der Leuchtpunkt (8) und/oder die Leerbuchse ein im wesentlichen zylindrisches Gehäuse aufweist und in im wesentlichen senkrechter Orientierung zur ebenen Signalfläche (6) in die Gussform (4, 14) eingefügt ist.

11. Verkehrssignal nach Anspruch 10,
**dadurch gekennzeichnet, dass**
in die Signalplatte (2, 12) mindestens ein strukturverstärkendes Element (10, 20) eingegossen ist.

12. Verkehrssignal nach Anspruch 11,
**dadurch gekennzeichnet, dass**
das strukturverstärkendes Element (10, 20) als eine Glasfasermatte ausgebildet ist.

## Claims

1. Method for producing a signal plate (2, 12) with a flat signal service (6) by
a) Provision of a mould (4, 14) corresponding to the external form of the signal plate (2, 12);
b) Insertion of at least one light point (8) and/or of at least one empty socket into the mould (4, 14);
the following steps are also included:
c) Filling the mould (4, 14) with a flowable, hardenable plastic for creating a moulded body;
d) Hardening of the plastic; and
e) Removal of the mould and, in the case of moulded-in empty sockets, insertion of light points (8) into the empty socket, with the light point (8) and/or the empty socket having an essentially cylindrical housing and being inserted in an essentially vertical orientation to the flat signal surface (6) into the mould (4, 14).

2. The method according to claim 1,
with
the light point (8) and/or the empty socket being moulded up to a depth which corresponds at a maximum to its diameter.

3. The method according to claim 1 or 2,
with,
before the filling of the mould (4, 14) at least one structure-reinforcing element (10) being inserted into the mould (4, 14).

4. The method according to claim 3,
with
the at least one structure-reinforcing element being a glass-fibre mat (10).

5. The method according to one of claims 1 to 4,
with
the light point (8) and/or the empty socket being pushed onto the mould (14) when the mould (4, 14) is being filled.

6. The method according to one of claims 1 to 5,
with
the mould (14) featuring at least one recess (16) into which the light point (8) and/or the empty socket is inserted.

7. The method according to claim 6,
with
the at least one recess (16) being formed so that form elements (18) assigned to the light point (8) projecting from the plane of the signal plate (2, 12), especially protective or shielding elements, are also created during the moulding process.

8. The method according to claim 7,
with
at least one further structure-reinforcing element (20) being introduced into the recess before the mould (4, 14) is filled.

9. The method according to claim 8,
with
an area (20) of the glass-fibre mat (10) being bent into the recess (16) as the further structure-reinforcing element, on which otherwise a light point (8) and/or an empty sockets would rest.

10. Traffic signal with a signal plate (2, 12) created from moulded plastic with a flat signal surface (6), which signal plate contains at least one light point (8),
**characterised in that** at least one light point (8) and/or at least one empty socket is moulded in to form a non-positive or positive fit, with the light point ( 8) and/or the empty socket having an essentially cylindrical housing and being inserted in an essentially vertical orientation to the flat signal surface (6) into the mould (4, 14).

11. Traffic signal according to claim 10,
**characterised in that**
at least one structure-reinforcing element (10, 20) is moulded into the signal plate (2, 12).

12. Traffic signal according to claim 11,
**characterised in that**
the structure-reinforcing element (10, 20) is embodied as a glass-fibre mat.

## Revendications

1. Procédé de fabrication d'un panneau ( 2, 12 ) signalisation ayant une surface ( 6 ) de signalisation, qui est plane, en
a) se procurant un moule ( 4, 14 ) de coulée correspondant à la forme extérieure du panneau ( 2, 12 ) de signalisation ;
b) en insérant au moins un point ( 8 ) lumineux et/ou au moins une douille vide dans le moule ( 4, 14 ) de coulée ;
dans lequel
on effectue en outre les stades suivants :
c) On verse une matière plastique durcissable et susceptible de s'écouler dans le moule ( 4, 14 ) de coulée pour obtenir une pièce coulée ;
d) on durcit la matière plastique ; et
e) on retire la pièce coulée et, dans le cas de l'insertion de douilles vides, on insère des points ( 18 ) lumineux dans la douille vide le point ( 8 ) lumineux et/ou la douille vide, ayant un boîtier sensiblement cylindrique et étant inséré dans le moule ( 4, 14 ) de coulée suivant une orientation sensiblement perpendiculaire à la surface ( 6 ) plane de signalisation.

2. Procédé suivant la revendication 1,
dans lequel
on incorpore le point ( 8 ) lumineux et/ou la douille vide jusqu'à une profondeur qui correspond au maximum à son diamètre.

3. Procédé suivant la revendication 1 ou 2,
dans lequel
avant de procéder au versement dans le moule ( 4, 14 ) de coulée, on insère au moins un élément ( 10 ) de renfort de la structure dans le moule ( 4, 14 ) de coulée.

4. Procédé suivant la revendication 3,
dans lequel
le au moins un élément de renfort de la structure est une nappe ( 10 ) de fibres de verre.

5. Procédé suivant l'une des revendications 1 à 4,
dans lequel
on pousse le point ( 8 ) lumineux et/ou la douille vide sur le moule ( 14 ) de coulée lorsque l'on procède au versement dans le moule ( 4, 14 ) de coulée.

6. Procédé suivant l'une des revendications 1 à 5,
dans lequel
le moule ( 14 ) de coulée a au moins une indentation ( 16 ) dans laquelle le point ( 8 ) lumineux et/ou la douille vide est insérée.

7. Procédé suivant la revendication 6,
dans lequel
la au moins indentation ( 16 ) est conformée de manière à produire en même temps, lors du versement, des éléments ( 18 ) moulés, notamment des éléments de protection ou d'écran, sortant du plan du panneau ( 2, 12 ) de signalisation et associés au point ( 8 ) lumineux.

8. Procédé suivant la revendication 7,
dans lequel
avant de procéder au versement dans le moule ( 4, 14 ) de coulée, on introduit dans l'indentation au moins un autre élément ( 20 ) de renfort de la structure.

9. Procédé suivant la revendication 8,
dans lequel
comme autre élément de renfort de la structure, on courbe une partie ( 20 ) de la nappe de fibres de verre dans l'indentation ( 16 ), sur laquelle sinon un point ( 8 ) lumineux et/ou une douille vide s'appliquerait.

10. Feu de circulation comprenant un panneau ( 2, 12 ) de signalisation produit à partir d'une coulée de matière plastique et ayant une surface ( 6 ) plane de signalisation, panneau de signalisation qui comporte au moins un point ( 16 ) lumineux, **caractérisé en ce qu'**au moins un point ( 8 ) lumineux et/ou au moins une douille vide est inséré à complémentarité de force et de forme, le point ( 8 ) lumineux et/ou la douille vide ayant un boîtier sensiblement cylindrique et étant inséré dans le moule ( 4, 14 ) de coulée suivant une orientation sensiblement perpendiculaire à la surface ( 16 ) plane de signalisation.

11. Feu de signalisation suivant la revendication 10,
**caractérisé en ce que**
au moins un élément ( 10, 20 ) de renfort de la structure est inséré dans le panneau ( 2, 12 ) de signalisation.

12. Feu de signalisation suivant la revendication 11,
**caractérisé en ce que**
l'élément ( 10, 20 ) de renfort de la structure est constitué sous la forme d'une nappe de fibres de verre.
